Europäisches Patentamt

European Patent Office

Office européen des brevets

(11) Publication number: **0 644 233 A1**

# EUROPEAN PATENT APPLICATION

(21) Application number: **94112021.4**

(22) Date of filing: **02.08.94**

(51) Int. Cl.⁶: **C08K 7/06**, C08J 3/215, B60C 1/00, //C08L21:00

(30) Priority: **12.08.93 US 106245**

(43) Date of publication of application:
**22.03.95 Bulletin 95/12**

(84) Designated Contracting States:
**BE DE ES FR GB IT NL**

(71) Applicant: **THE GOODYEAR TIRE & RUBBER COMPANY**
**1144 East Market Street**
**Akron, Ohio 44316-0001 (US)**

(72) Inventor: **Benko, David Andrew**
**68 Spring Garden Drive**
**Munroe Falls,**
**Ohio 44262 (US)**
Inventor: **Obermaier, Christina Hall**
**40664 Delta Drive**
**Northville,**
**Michigan 48167 (US)**
Inventor: **Pyle, Kevin James**
**2137 Prestwick Drive**
**Uniontown,**
**Ohio 44685 (US)**
Inventor: **Tung, William C. T.**
**1038 Beechwood Drive**
**Tallmadge,**
**Ohio 44278 (US)**
Inventor: **Legge, Ronald Walter**
**2921 Sugarwood**
**League City,**
**Texas 77573 (US)**

(74) Representative: **Leitz, Paul**
**Goodyear Technical Center-Luxembourg**
**Patent-Department**
**L-7750 Colmar-Berg (LU)**

(54) Graphite fiber reinforced tires & method of incorporating graphite fibers into an elastomer.

(57) The invention relates to elastomers and articles reinforced with 0.10 to 25 phr Graphite fibers having a diameter of 0.05 to 0.5 microns and length from 1 to 40 μm. Also provided is an economical method of incorporating very fine Graphite fibers into an elastomer matrix. In the method Graphite fibers are dispersed in an acidic solution and mixed with a coagulating liquid (for coagulating latex), and the mixture of graphite/coagulating liquid is mixed with a latex solution to provide an elastomer/graphite composite.

FIG−1

Rank Xerox (UK) Business Services
(3.10/3.09/3.3.4)

## Background of the Invention

The invention relates to a method of incorporating graphite fiber reinforcement into an elastomer and elastomeric articles using Graphite fiber reinforcement.

The use of macro short fiber (0.05 mm to 10 mm in length with an aspect ratio of 50-200) reinforced polymers to make V-belts, tires and other composite polymer articles is well known in the art. Such prior art composites comprise a rubber composition (for example styrene butadiene rubber (SBR), polyisoprene, polybutadiene, polychloroprene, nitrile butadiene rubber (NBR), ethylene propylene diene monomer rubber (EPDM), natural rubber and mixtures thereof),which has been loaded with chopped or crushed fiber made from, for example, spun polyaramide (e.g. Kevlar® fibers, available from E.I. Dupont de Nemours & Company, Inc., Wilmington, Delaware), spun amide (e.g. spun nylon 6 (1,6 polycaprolactam available from Allied Chemical, Morristown, N.J.)), polybenzimidazole fibers, spun polyesters (e.g. polyethylene terephthalate (PET), also available from Allied Chemical).

Micro fibers ( 0.1 um to 10 um in length with an aspect ratio of 1-5) can be formed in situ or dispersed in a polymer matrix. (When incorporated into an article of manufacture, the micro fibers may be further elongated, the amount of elongation depending on the manner in which the rubber composite is processed.) Isayev et al, for example, in U.S. Patent 4,728,698, teach the in-situ formation of fibers in a polymer matrix by the addition of a liquid crystal polymer to a base polymer followed by mixing and extrusion.

It has been shown that the orientation of macro fibers in a polymer matrix can be controlled by the mixing and/or extrusion of a base polymer containing such fibers. The orientation of fibers in a polymer matrix improves the modulus (stiffness) of the polymer in the direction parallel to the direction of orientation. The presence of fibers also improves the cut resistance properties, load bearing properties, and green strength of the polymer. On the other hand, composites loaded with macro fibers tend to have a relatively higher hysteresis, which might limit the efficiency of the composite, especially when used in rubber articles that undergo large numbers of flexes in use.

Micro fiber composites without anisotropy improve the stiffness of a rubber compound while contributing little to the hysteresis of the compound. Micro fiber loaded composites have a lower hysteresis than comparable composites loaded with carbon black or macro fibers.

It is a continuing goal in the art to improve elastomer composites and to produce composites that have the beneficial properties observed in macro fiber loaded composites, while eliminating the detrimental properties. It is also the goal in the art to replace some of the filler materials in elastomeric composites for the same reasons.

Other objects of the invention will be apparent from the following description and claims.

## Summary of the Invention

Reinforced elastomeric articles and a method for preparing a reinforced elastomer are provided.

The reinforced articles comprise an elastomeric matrix containing 0.1 to 25 phr graphite fiber having a diameter of 0.05 to 0.5 microns and length of 1 to 40 $\mu$m.

The graphite fiber reinforcement can be used in elastomeric components of tires.

A method of mixing graphite fiber into an elastomer is also provided. The method comprises dispersing the graphite in an acidic solution, preparing a latex solution of an elastomer and preparing a coagulating solution, mixing the graphite solution with the coagulating solution, mixing the latex with the coagulating solution, and isolating precipitated graphite/rubber. The graphite/rubber precipitate may be used as formed or it may be mixed with more elastomer using conventional means.

## Brief Description of the Drawings

Fig. 1 illustrates a tire which can be made using the reinforced elastomer of the invention.

Fig. 2 is a graph illustrating the stress/strain properties of graphite reinforced composites as compared to a control.

## Detailed Description of the Invention

A purpose of the invention is to use graphite fiber having a diameter size of 0.05 to 0.5 microns, preferably 0.2 microns, as a reactive filler for tire elastomers. The crystalline nature of the graphite fibers provides strength and stiffness to the elastomer composites.

Graphite fibers are available from Applied Sciences, Inc., 141 W. Xenia Ave., Cedarville, Ohio 45314, and have an average diameter of $0.2\mu$ and an average length of $40\mu$. The graphite fibers break up when the rubber composition is being mixed in a form that is suitable for incorporation in rubber. Although the graphite fibers break on mixing, they still have, in the rubber composite, an l/d (length/diameter) greater than 1.

| TABLE I GRAPHITE FIBERS | | | |
|---|---|---|---|
| DIMENSION | DIAMETER $(\mu)$ | LENGTH $(\mu)$ | ASPECT RATIO L/D |
| | 0.2 | 40 | UP TO 200 |

The Graphite fibers are a higher density material than carbon black (specific gravity of 1.9-2.0 vs. 1.8), but can be used at much lower loadings, which would be advantageous in reducing the material weight in a tire. As described herein, beneficial results are obtained when about 5-20 phr carbon black is replaced with about 1.25 to 5 phr graphite fibers.

The graphite fibers have a low bulk density which makes them hard to handle. Incorporating the fibers in latex or polymer cement increases the bulk density of the material handled in a production process, and provides a means for making the fibers easier to handle.

In a method of the carrying out the invention, graphite fibers may be incorporated into an elastomer in a latex solution. In the method, Graphite may be first dispersed in an acidic solution pH 1 to pH 6, preferably pH 3.5 to pH 6. Any acid that does not react substantially with the graphite can be used in the solution, but it is preferred that the acid be a mineral acid or an organic acid selected from the group comprising HCl, $HNO_3$, $H_2CO_3$, $H_2SO_4$, acetic acid, and formic acid.

After the Graphite is dispersed, the graphite solution can be mixed with a conventional coagulating solution (for coagulating latex) to form a graphite containing coagulating solution. Any conventional, slightly acidic coagulating solution can be used. An exemplary coagulating solution contains NaCl, $Al_2(SO_4)_3$ and an alkyl ammonium quaternary salt.

An elastomer latex, which is prepared separately, may be mixed with the graphite containing coagulating solution to incorporate graphite into the elastomer as the elastomer coagulates. In a preferred embodiment, the latex may be dripped into the coagulating solution.

The coagulated elastomer, containing graphite, is collected and can be used as a master batch which can be further mixed with more of the same elastomer or with another elastomer, using conventional mixing, to provide a graphite loading in the elastomer; or the graphite reinforced elastomer may be used, as formed, in the preparation of elastomeric articles.

The Graphite fibers can also be dispersed in and mixed with a solvent, and the mixture of graphite/solvent is mixed with a polymer/solvent solution and the solvent then removed to provide an elastomer/graphite composite. Finally, the fibers may also be dry blended with a polymer in a high shear mixer to provide an elastomer/graphite composite. The elastomer/graphite composite may be used as formed or it can be used as a masterbatch and mixed with more elastomer.

Other methods of incorporating a fiber into an elastomer will be apparent to those skilled in the art.

Graphite reinforced elastomers can be used at a loading of 0.5 to 50 phr to make reinforced elastomeric articles such as automotive belts, hoses and tires. Other types of articles in which the reinforced elastomer can be used will be apparent to those skilled in the art.

In a preferred embodiment, the graphite fiber reinforced elastomer can be used as a reinforced tire component having improved stress/strain properties. In an embodiment where graphite fiber reinforcement is used in place of carbon black reinforcement, the tire component has reduced hysteresis while the modulus and other properties are maintained at a high level. Graphite reinforced composites also have reduced hysteresis as compared to their carbon black reinforced counterparts.

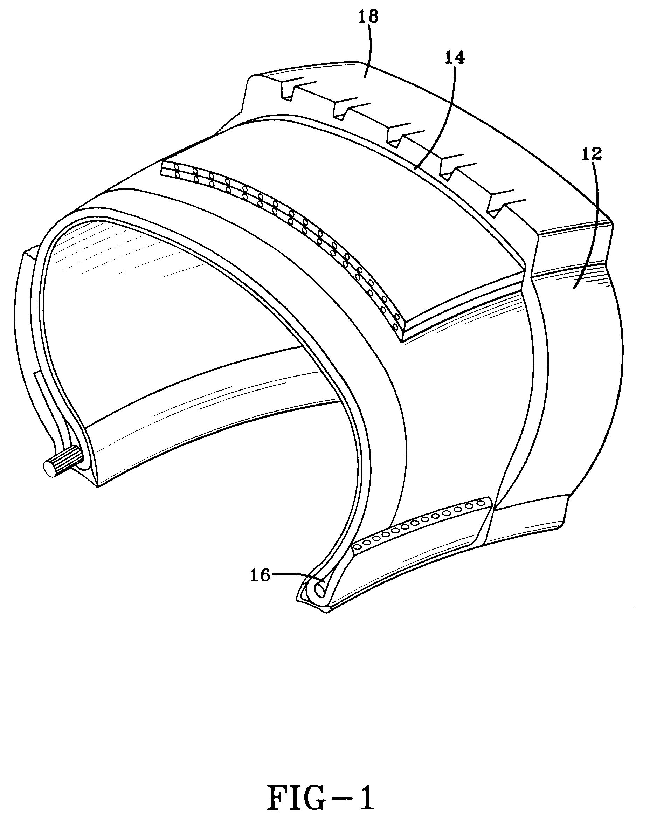

With reference to Fig. 1, tire components in which a graphite reinforced elastomer can be used include the sidewall 12 (to improve scuff resistance and cracking resistance), the tread base 14 (to help prevent belt ply separation), the apex 16 (to stiffen the lower sidewall), and the tread 18 (to improve treadwear and prevent chipping and chunking). Other uses of the reinforced elastomer will be apparent to those skilled in the art.

The invention is further illustrated with reference to the following examples.

EXAMPLE 1

Graphite as adjunct filler with carbon black:

Graphite was added at 2.5 phr to a model compound in addition to the normal carbon black loading (44.75phr). Graphite and natural rubber were premixed in a microprocessor-equipped laboratory Kobe Mixer (180°C, 4.5 min) and then this graphite loaded polymer was used in the compound described as follows.

For the purposes of this description, the elastomer used to bind the graphite in the latex is considered insignificant and is not represented in the formula.

TABLE II

| FORMULATION | | |
|---|---|---|
| # | INGREDIENT | phr |
| 1 | SBR | 50.00 |
| 2 | CIS 1,4 POLYISOPRENE | 50.00 |
| 3 | CARBON BLACK | 44.75 |
| 4 | FIBER | 0-10 |
| 5 | NON BLACK FILLER* | 17.00 |
| 6 | PROCESS AIDS** | 7.20 |
| 7 | CURE ACTIVATORS | 5.50 |
| 8 | ANTIDEGRADANTS | 4.87 |
| 9 | ACCELERATORS | 2.55 |
| 10 | SULFUR | 1.50 |

\* Non black fillers include silicas and other conventional fillers
\*\* Process aids include processing oil and plasticizers

Kobe Mixer Compounding.

The compound non-productive ingredients (1-8), were mixed in an internal mixer at 55 rpm using a 100°C oil bath. Mix time was 4.5 minutes, and the drop temperature was approximately 160°C.

The non-productive mixes were used for further compounding by reloading the non-productives in the mixer and adding accelerators and vulcanizing agents.

Productive mixes (non-productive plus the accelerators and vulcanizing agents, (ingredients 9-10) were carried out without external heating at 55 rpm for 2.5 minutes to 108°C. The compounded elastomers were cured at 150°C. The vulcanizate physical properties of the reinforced elastomer were compared to that of a control compound comprising the above formulation prepared without the addition of a fiber reinforcement.

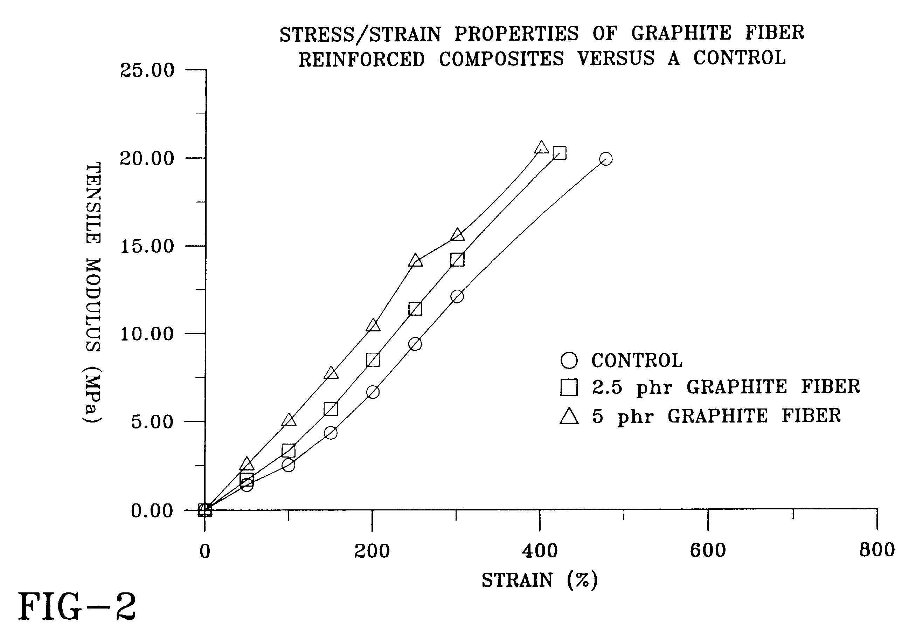

Tensile Modulus data is shown below, and is further illustrated in Fig. 2.

| ELONGATION (INSTRON TEST) | % TENSILE MODULI IMPROVEMENT COMPARED TO THE CONTROL |
|---|---|
| AT 50% ELONGATION | 25 |
| AT 100% ELONGATION | 32 |
| AT 200% ELONGATION | 27 |
| AT 300% ELONGATION | 17 |

EXAMPLE 2

Cured Rubber Properties of Graphite as Partial Filler Replacement for Carbon Black.

Graphite fibers were used to partially replace carbon black in the model formulation. Graphite, which was encased in elastomer as described in example 1, was used at 2.5 phr and carbon black was used at 34.75 phr and 29.75 phr, respectively, in the model recipe. Natural rubber prepared according to the formula, leaving out the graphite and including carbon black at 44.75 phr, was used as the control.

The Instron results for the three composites show that the low strain moduli of the graphite reinforced composites are equivalent to the control. However, there is an incremental increase in room temperature rebound and 100°C rebound in the graphite composites, which correlates to a reduction in rolling resistance in a tire. Partial replacement of carbon black with graphite in a tire would reduce the weight, and should reduce the rolling resistance of the tire.

Normalized rebound data, using the control equal 100, is shown below.

TABLE III

| CURED RUBBER HYSTERESIS PROPERTIES OF GRAPHITE FIBERS AS PARTIAL REPLACEMENT FOR CARBON BLACK | | |
|---|---|---|
| MATERIAL | REBOUND | |
| | ROOM TEMP | 100°C |
| Control | 100 | 100 |
| 2.5 phr Fiber 34.75 phr Black | 108 | 105 |
| 2.5 phr Fiber 29.75 phr Black | 121 | 109 |

EXAMPLE 3

Table IV shows the comparative results of using graphite fiber in addition to the normal loading of carbon black. There is a significant increase in tensile moduli up to 300% elongation for graphite at 2.5-5 phr. The ultimate tensile is equal to the control in both cases. The modulus is enhanced even at high strains. The ultimate elongation is decreased slightly.

The contribution of a reinforcing material in a compound is dependent on modulus, volume, and the aspect ratio of the filler. Because graphite fibers have a higher aspect ratio than carbon black, it provides more reinforcement. These data indicate that the graphite reinforced polymer may have utility in low strain tire applications.

A graphite loaded natural rubber composite when loaded at 2.5-5 phr has a higher 300% modulus than a similar carbon black loaded composite. Also, the ultimate tensile of NR/graphite is 2.5% higher than that of NR/carbon black.

TABLE IV

| CURED RUBBER PROPERTIES OF GRAPHITE FIBERS AS ADJUNCT FILLER WITH CARBON BLACK (Results Relative to Control of 100%) | | | | | | | | |
|---|---|---|---|---|---|---|---|---|
| Material | MODULUS | | | | | | Ultimate Tensile | Ultimate Elongation |
| | 50% | 100% | 150% | 200% | 250% | 300% | | |
| Control | 100 | 100 | 100 | 100 | 100 | 100 | 100 | 100 |
| +2.5 phr Fiber | 125 | 132 | 130 | 127 | 121 | 117 | 102 | 89 |
| +5 phr Fiber | 186 | 197 | 176 | 156 | 150 | 129 | 103 | 85 |

## EXAMPLE 4

Table V shows the results of replacing part of the carbon black with graphite. Low strain moduli (<100% elongation) are similar to the control, however at break, there is about a 3-8% decrease in tensile strength using the graphite. At higher loading of graphite there is further decrease in tensile at break and elongation at break.

TABLE V

| CURED RUBBER TENSILE PROPERTIES OF GRAPHITE FIBER AS PARTIAL FILLER REPLACEMENT FOR CARBON BLACK (Results Relative to Control of 100%) | | | | | | | | |
|---|---|---|---|---|---|---|---|---|
| Material | MODULUS | | | | | | Ultimate Tensile | Ultimate Elongation |
| | 50% | 100% | 150% | 200% | 250% | 300% | | |
| Control | 100 | 100 | 100 | 100 | 100 | 100 | 100 | 100 |
| +2.5 phr Fiber -10 phr Black | 97 | 104 | 101 | 99 | 96 | 95 | 97 | 95 |
| +2.5 phr Fiber -15 phr Black | 97 | 100 | 92 | 86 | 81 | 80 | 92 | 104 |

EXAMPLE 5

Table VI shows that cure times of the graphite-modified compounds are similar to the control.

TABLE VI

| CURE RHEOMETRY OF GRAPHITE FIBER FILLER REPLACEMENT FOR CARBON BLACK | | | | | | | | | |
|---|---|---|---|---|---|---|---|---|---|
| MATERIAL | T.1 PT RISE (MIN) | Tc25 (MIN) | Tc50 (MIN) | Tc75 (MIN) | Tc90 (MIN) | S MIN (dNm) | S MAX (dNm) | S AMT (dNm) | CURE RATE (dNm/MIN) |
| Control | 5.3 | 7.7 | 9.0 | 11.1 | 15.4 | 9.8 | 41.9 | 32.2 | 2.81 |
| +2.5 phr Fiber -10 phr Black | 5.3 | 7.4 | 8.8 | 10.9 | 14.3 | 9.6 | 39.4 | 29.9 | 2.99 |
| +5 phr Fiber -15 phr Black | 6.0 | 8.5 | 9.9 | 11.6 | 14.8 | 7.2 | 36.4 | 29.2 | 3.06 |

From the data obtained, the following conclusions can be reached.

1. Graphite does not significantly affect the normal sulfur cure behavior of elastomers.

2. Use of graphite in addition to carbon black (2-5 phr) results in enhancement of modulus at low and high strains (this is an advantage over other conventional types of fibers which tend to debond at high strain, and thus no longer contribute to the physical properties of the composite).

3. Graphite used as partial replacement of (in place of (ipo)) carbon black (2.55 phr ipo 10-15 phr carbon black) gave stress-strain properties equivalent to the control.

4. Replacement of carbon black with graphite on an equal weight basis (2.5 phr ipo) increases the room temperature rebound, which may lead to a reduction in rolling resistance.

While specific embodiments of the invention have been described and illustrated, those skilled in the art will recognize that the invention may be variously modified and practiced without departing from the spirit of the invention. The invention is limited only by the following claims.

**Claims**

1.   A reinforced elastomeric article characterized by elastomeric matrix having 0.1 to 30 phr graphite fibers with a diameter of 0.01 to 8 microns.

2.   The reinforced elastomeric article of claim 1 characterized by said graphite fibers having a diameter of 0.01 to 8 microns and a median diameter size of about 0.1 to 0.3 microns.

3.   A tire having a reinforced tire component characterized by an elastomeric matrix having 0.1 to 30 phr graphite fibers with a diameter of 0.01 to 8 microns.

4.   The tire of claim 3 characterized by said graphite fibers having a diameter of 0.01 to 8 microns and a median particle size of about 0.1 to 0.3 microns.

5.   A method of mixing graphite into an elastomer comprising the steps of
        (a) preparing a latex solution of an elastomer
        (b) dispersing graphite fibers in said latex solution
        (c) preparing a coagulating solution adapted to coagulate said latex, and
        (d) mixing said coagulating solution and said latex thereby incorporating graphite fibers in said elastomer.

6.   The method of claim 5 comprising the further steps of mixing said elastomer containing graphite with more elastomer.

7.   The method of claim 5 wherein said mixing step further comprises.
        (a) combining the graphite containing solution and the coagulating solution;

7

(b) dripping the latex solution into the coagulating solution; and

(c) isolating a precipitated graphite/rubber.

8. A method of mixing graphite into an elastomer comprising the steps of

(a) adding graphite fibers to a solvent to make a fiber solvent/mixture

(b) preparing a solvent based rubber cement

(c) mixing the graphite/solvent mixture of (a) with the rubber cement of (b) to make a fiber/rubber cement blend

(d) stripping the solvent from the fiber/rubber cement blend to form a fiber/rubber masterbatch.

FIG-1

# STRESS/STRAIN PROPERTIES OF GRAPHITE FIBER REINFORCED COMPOSITES VERSUS A CONTROL

FIG-2

EP 0 644 233 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-90 10296 (JAPAN SYNTHETIC RUBBER COMPANY LTD.)<br>* claim 1 *<br>* page 7, line 25 - page 8, line 7 *<br>* page 10, line 1 - line 4 * | 1,2 | C08K7/06<br>C08J3/215<br>B60C1/00<br>//C08L21:00 |
| X | DATABASE WPI<br>Derwent Publications Ltd., London, GB;<br>AN 91-027041[04]<br>& JP-A-2 298 529 (ASAHI CHEMICAL IND. KK.)<br>10 December 1990<br>* abstract * | 1 | |
| X | DATABASE WPI<br>Derwent Publications Ltd., London, GB;<br>AN 90-317936[42]<br>& JP-A-2 228 340 (ASAHI CHEMICAL IND. KK.)<br>11 September 1990<br>* abstract * | 1 | |
| X | WO-A-88 01630 (NIKKISO KK.)<br>& DATABASE WPI<br>Derwent Publications Ltd., London, GB;<br>AN 88-077731[11]<br>& JP-A-62 505 198 (NIKKISO KK.) 10 March 1988<br>* abstract * | 1 | TECHNICAL FIELDS SEARCHED (Int.Cl.6)<br><br>C08K<br>C08J<br>B60C |
| A | CA-A-775 042 (BAKELITE XYLONITE LTD.)<br>* claims 1,2 * | 5 | |
| A | DATABASE WPI<br>Derwent Publications Ltd., London, GB;<br>AN 86-295797[45]<br>& JP-A-61 218 661 (ASAHI CHEMICAL IND. KK.) 29 September 1986<br>* abstract * | 1 | |

The present search report has been drawn up for all claims

| Place of search | Date of completion of the search | Examiner |
|---|---|---|
| THE HAGUE | 13 December 1994 | Niaounakis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)